# FASCICULE DE BREVET EUROPEEN

(11) **EP 1 332 297 B1**
(45) Date de publication et mention de la délivrance du brevet: **01.02.2006**
(21) Numéro de dépôt: 01982575.1
(22) Date de dépôt: 26.10.2001
(51) Int. Cl.: F16C 25/06, F16C 23/08, F16C 23/10

(54) **PALIER A ROULEMENT COMPORTANT UN MOYEN DE RATTRAPAGE DES FAUX-RONDS ET PROCEDE DE RATTRAPAGE DES FAUX-RONDS**
WÄLZLAGER MIT EINER VORRICHTUNG ZUM KORRIGIEREN VON RUNDLAUFFEHLERN UND VERFAHREN ZUM KORRIGIEREN VON RUNDLAUFFEHLERN
BEARING ASSEMBLY COMPRISING RADIAL RUN-OUT COMPENSATING MEANS AND RADIAL RUN-OUT COMPENSATING METHOD

(30) Priorité: 27.10.2000 FR 0013873
(43) Date de publication de la demande: 06.08.2003
(73) Titulaire: CENTRE NATIONAL DE LA RECHERCHE SCIENTIFIQUE (CNRS), 75794 Paris Cedex 16 (FR)
(72) Inventeur: JACQUET, P.G.J., chez Mme Marguerite Chalumeau, F-25320 MONTFERRAND LE CHATEAU (FR); DAHAN, Marc, F-25000 BESANCON (FR); GARCIN, Camille, Pierre, Marie, F-25680 GONDENANS LES MOULINS (FR)
(74) Mandataire: Michelet, Alain
(86) Numéro de dépôt international: PCT/FR2001/003346
(87) Numéro de publication internationale: WO 2002/035106

(56) Documents cités:
- DE-A- 2 131 326
- DE-A- 19 859 307
- US-A- 3 859 003
- US-A- 4 095 856
- US-A- 4 854 750

## Description

L'invention concerne de manière générale un palier à roulement possédant une capacité de rattrapage des faux-ronds du roulement ainsi qu'un procédé de rattrapage d'un faux-rond d'un palier à roulement.

Lors de la réalisation d'un palier à roulement, il est possible de réduire les incertitudes de position et de rotation des éléments du palier, jeux internes compris, par un montage serré de ces éléments. Ainsi, un moyen connu pour régler la dispersion sur l'entraxe et le défaut de parallélisme d'un palier à roulement consiste en des appuis multiponctuels exercés par des vis sur la cage du palier, mais ce moyen manque de sensibilité et de rigidité. Toutefois, le manque de rigidité peut être compensé en coulant une résine comblant le jeu entre la cage et le bâti. Cependant, même lorsqu'on a annulé tous les jeux, il reste les faux-ronds de toutes les bagues concentriques du palier.

Jusqu'à présent, la solution consiste à usiner des bagues à faux-ronds réduits. Non seulement cette solution est coûteuse, mais même si les faux-ronds sont réduits au maximum, ils ont un effet cumulatif, et au montage des bagues de roulement, on introduira toujours leur excentration. Il n'existe pas, à ce jour, de solution connue permettant de rattraper les faux-ronds d'un palier de roulement.

La présente invention a donc pour objet de fournir un palier à roulement possédant une capacité de rattrapage des faux-ronds.

La présente invention a également pour objet un procédé pour rattraper les faux-ronds d'un palier à roulement. Les buts ci-dessus sont atteints selon l'invention en disposant dans un palier à jeu nul:
- entre une surface extérieure sphérique d'une bague extérieure de roulement et une surface intérieure sphérique d'un support extérieur de la bague extérieure de roulement, une bague excentrique sphérique pouvant être déplacée par glissement sur la surface extérieure sphérique de la bague extérieure de roulement et sur la surface intérieure sphérique du support extérieur de la bague extérieure, et
- entre une surface extérieure sphérique d'un support intérieur de la bague intérieure de roulement et une surface extérieure excentrique d'une bague intérieure de roulement, une bague excentrique sphérique pouvant être déplacée par glissement sur la surface extérieure sphérique du support intérieur et la surface extérieure sphérique de la bague intérieure de roulement.

Plus précisément, la présente invention fournit un palier à roulement à rattrapage des faux-ronds qui comprend assemblés à jeu nul:
- une bague extérieure de roulement ayant une surface extérieure et une surface intérieure de roulement,
- une bague intérieure de roulement ayant une surface extérieure et une surface intérieure de roulement,
- des éléments de roulement disposés entre les surfaces intérieures de roulement des bagues de roulement extérieure et intérieure,
- une couronne extérieure de support et une couronne intérieure de support, ayant chacune une surface intérieure, les bagues de roulement étant maintenues entre les surfaces intérieures des couronnes de support extérieure et intérieure,
caractérisé en ce que:
- la surface extérieure de la bague extérieure de roulement et la surface intérieure de la couronne extérieure de support sont des surfaces sphériques dont les centres situés sur un même axe de révolution, sont écartés l'un de l'autre, de sorte que ces surfaces définissent entre elles un espace annulaire excentrique et sphérique, extérieur au roulement,
- une bague extérieure excentrique, épousant la forme de l'espace annulaire extérieur, et disposée dans cet espace,
- la surface extérieure de la bague intérieure de roulement et la surface intérieure de la couronne intérieure de support sont des surfaces sphériques dont les centres situés sur un même axe de révolution sont écartés l'un de l'autre de sorte que ces surfaces définissent entre elles un espace annulaire excentrique et sphérique, intérieur au roulement,
- une bague intérieure excentrique, épousant la forme de l'espace annulaire intérieur, et disposée dans cet espace, et également
caractérisé en ce que des moyens sont prévus pour faire basculer les bagues excentriques intérieure et extérieure par glissement dans les espaces annulaires, grâce à quoi on peut rattraper les faux-ronds.

Les paliers selon l'invention peuvent être tout type de paliers à roulement tels que des paliers à roulement à billes, à rouleaux ou à aiguilles, de préférence à billes ou à rouleaux.

Dans une réalisation préférée de l'invention, les moyens de basculement des bagues excentriques sont constitués par trois vis de réglage disposées à 120° sur une périphérie des bagues excentriques. On peut également utiliser quatre vis de réglage réparties à 90°.

Dans une autre réalisation de l'invention, le palier à roulement défini ci-dessus est modifié pour permettre un réglage global du voile indépendamment des faux-ronds. Pour ce faire, on prévoit des moyens pour déplacer par glissement les bagues intérieure et extérieure de roulement. Ces moyens comprennent avantageusement des vis, par exemple trois vis de pression réparties à 120° s'appuyant sur une périphérie des bagues de roulement.

La suite de la description se réfère aux figures annexées qui représente respectivement:
Figure 1, une vue en coupe schématique d'un palier à roulement à billes selon l'invention.
Figure 2, une vue schématique agrandie du montage de la bague extérieure de roulement du palier de la Figure 1, montrant le décalage des centres des surfaces sphériques.
Figure 3, une vue schématique agrandie du montage de la bague intérieure de roulement du palier de la Figure 1, montrant le décalage des centres des surfaces sphériques.
Figure 4, une vue schématique en coupe du montage d'une bague excentrique sphérique située dans l'espace annulaire intérieur.
Figure 5, une vue schématique en coupe d'un palier à roulement à rouleaux selon l'invention.
Figure 6, une vue schématique en coupe du palier de la Figure 1, comportant des moyens de réglage du voile.

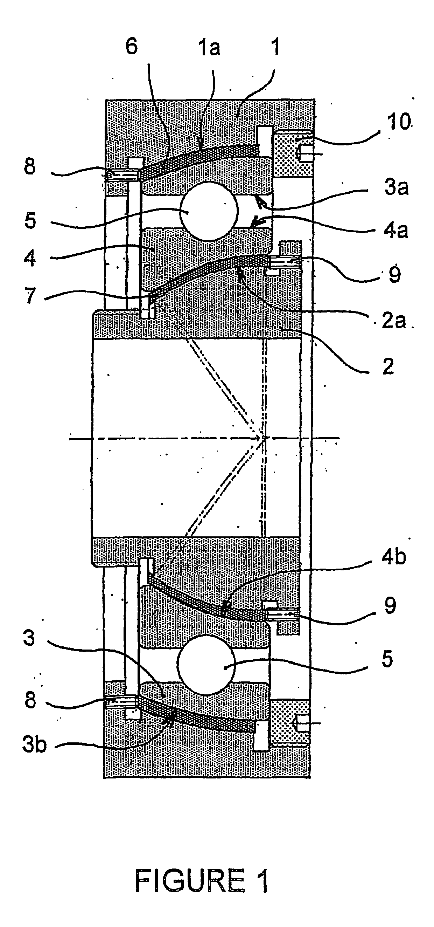

En se référant aux figures où les mêmes éléments sont repérés par ces mêmes numéros de référence, et plus particulièrement à la Figure 1, on a représenté un palier à roulement à billes selon l'invention. Le palier comprend, comme cela est classique, une couronne extérieure de support 1 et une couronne intérieure de support 2 maintenant entre elles une bague extérieure de roulement 3 et une bague intérieure de roulement 4 emprisonnant des billes de roulement 5. L'ensemble est maintenu par au moins un écrou 10.

La structure qui vient d'être décrite est classique et comme cela est bien connu, la couronne extérieure de support 1 est généralement fixée à un bâti et demeure fixe cependant que la couronne intérieure de support 2 est emmanchée sur un arbre tournant (non représenté) et tourne avec celui-ci.

Comme on le voit sur la Figure 1, la surface extérieure 3b de la bague extérieure de roulement 3 et la surface extérieure 4b de la bague intérieure de roulement 4 sont sphériques. De même, la surface intérieure 1a de la couronne extérieure de support 1 et la surface intérieure 2a de la couronne intérieure de support 2 sont sphériques.

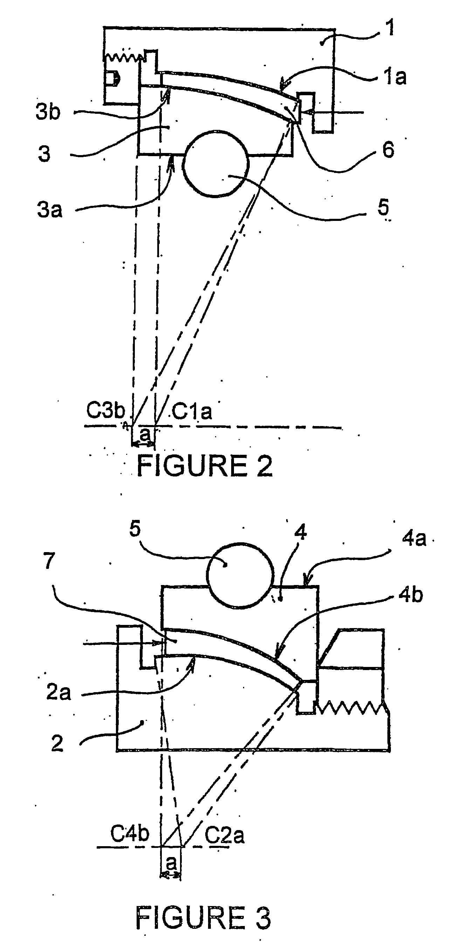

La Figure 2 montre que le centre C1a de la surface intérieure sphérique 1a de la couronne extérieure 1 et le centre C3b de la surface extérieure sphérique 3b de la bague extérieure de roulement 3 sont situés sur l'axe du palier mais écartés l'un par rapport à l'autre, créant ainsi entre les surfaces sphériques 1a et 3b, un espace annulaire excentrique extérieur.

La Figure 2 montre également qu'une bague excentrique 6 est disposée dans l'espace annulaire extérieur, c'est-à-dire entre la surface intérieure sphérique 1a de la couronne sphérique extérieure 1 et la surface extérieure sphérique 3b de la bague extérieure de roulement 3. La bague excentrique 6 épouse la forme de cet espace annulaire extérieur.

La Figure 3 montre que le centre C4b de la surface extérieure sphérique 4b de la bague intérieure de roulement 4 et le centre C2a de la surface intérieure sphérique 2a de la couronne intérieure de support 2 sont situés sur l'axe du palier, mais écartés l'un par rapport à l'autre créant ainsi entre les surfaces sphériques, un espace annulaire excentrique intérieur.

La Figure 3 montre également qu'une bague excentrique 7 est disposée dans l'espace annulaire intérieur, c'est-à-dire entre la surface extérieure sphérique 4b de la bague intérieure de roulement 4 et la surface intérieure sphérique 2a de la couronne intérieure 2.

D'après la Figure 1, des vis de réglage 8 et 9 sont prévues pour s'appuyer sur une des périphéries des bagues excentriques 6 et 7, respectivement, pour pouvoir par vissage, faire basculer les bagues excentriques 6 et 7 sur les surfaces sphériques correspondantes des couronnes de support 1, 2 et des bagues de roulement 3, 4 afin de pouvoir rattraper les faux-ronds éventuellement présents.

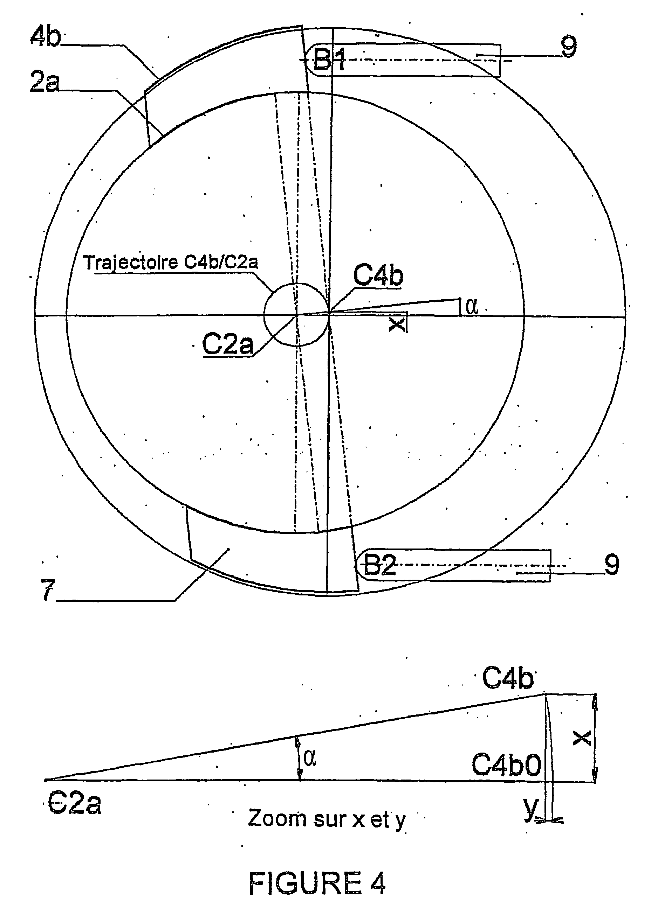

Comme on le voit mieux sur la Figure 4, les centres C2a et C4b des surfaces sphériques 2a et 4b sont sur l'axe du palier mais décalés d'une distance a, comme le sont également les centres C1a et C3b des surfaces sphériques 1a et 3b. Ce décalage peut être le même ou différent.

Comme les bagues excentriques 6 et 7 épousent respectivement les espaces annulaires extérieur et intérieur, leurs surfaces intérieure 6a, 7a et extérieure 6b, 7b sont complémentaires des surfaces sphériques des couronnes et des bagues de roulement correspondantes, respectivement 3b et 4b d'une part, et 1a et 2a, d'autre part. Par conséquent, leurs centres sont également sur l'axe du palier, mais aussi écartés d'une distance a.

Les bagues excentriques 6 et 7 sont analogues à des biellettes rotulées à chacune de leurs extrémités. Une particularité réside dans le fait que la biellette a une longueur très faible a (décalage des centres) devant le rayon R des rotules (R/a > 20). Le centre d'une rotule décrit donc une calotte sphérique de rayon a autour du centre de l'autre rotule. Le déplacement d'une bague de roulement par rapport à sa couronne de support comporte deux translations à trajectoire sphérique et trois rotations. Cette liaison de type ponctuel se transforme en liaison complète grâce au coincement obtenu dès qu'on serre les écrous de fixation (le coincement est analogue à celui d'un emmanchement conique). Les bagues excentriques tridimensionnelles 6, 7 sont capables d'engendrer une excentration qui contient le zéro, et dont l'amplitude maximale est suffisante pour absorber l'incertitude. Le déplacement axial parasite est négligeable.

A titre d'exemple illustré sur la Figure 4, on fixe la distance a égale à 1,25 mm. Soient B1 et B2 les points d'application des vis 9 sur la bague excentrique 7. Les distances séparant C2a et B1 d'une part, et C2a et B2 d'autre part, sont toutes deux égales à 25 mm. Les vis 9 ont un pas de 0,5 mm. Si l'on dévisse de deux tours en B2 tandis que l'on visse de deux tours en B1, la bague excentrique 7 bascule d'un angle α dont la tangente a une valeur proche de 1/25 = 0,04 correspondant à un angle de 2,29°. Le déplacement radial x de C4b satisfait à la relation suivante: x = a.tan α = 1,25.0,04 = 0,05 mm = 50 µm.

La composante axiale parasite y vérifie la relation ci-après: y = a.(1-cos α) = 1,25 (1-cos 2,29°) = 0,001 mm = 1 µm.

L'angle de basculement α est largement inférieur à l'angle de frottement pour garantir le coincement au serrage.

La dispersion dimensionnelle et la condition de parallélisme sur le bâti impose un domaine de réglage plus grand pour l'incertitude de position que pour l'incertitude de rotation. Toutefois, en général, la couronne de support extérieure 1 et la bague de roulement extérieure 3 sont dans le bâti et fixes, et la couronne intérieure de support 2 et la bague intérieure de roulement 4, sont fixés à un arbre et tournent avec celui-ci. De ce fait, pour la couronne extérieure de support 1 et la bague extérieure de roulement 3, les rotules sont plus grandes et on peut, pour obtenir une sensibilité plus grande, diminuer la distance entre les centres C3b et C1a (ou celles entre C4b et C2a), ou augmenter les distances C3bB1 et C3bB2 (ou C4bB1 et C4bB2).

L'invention permet d'utiliser des bagues de roulement et des couronnes de support ayant des faux-ronds supérieurs à ceux antérieurement tolérés. Dans ce cas, on élargit la calotte sphérique décrite par les centres des rotules. Par exemple, pour a =2,5 mm et un angle de basculement toujours de 2,29°, on obtient une translation radiale maximale x = 100 µm (faux-rond maximum compensable 200 µm) et une composante axiale parasite y = 2 µm.

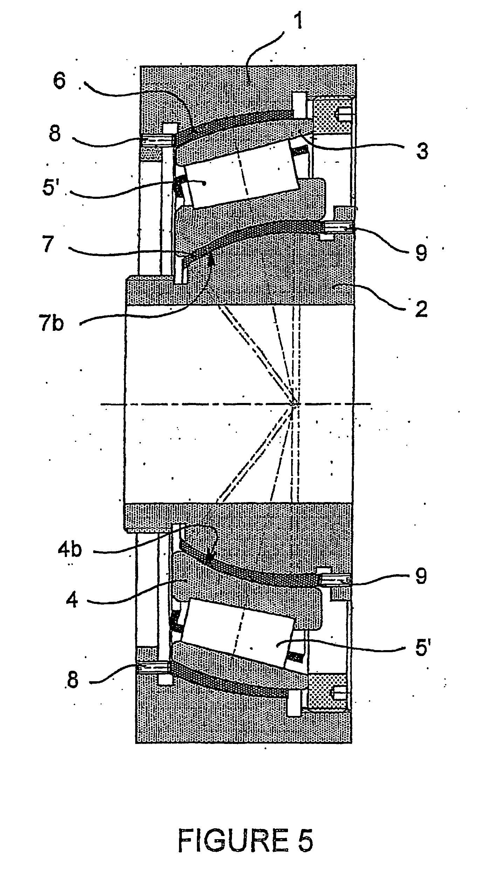

On a représenté sur la Figure 5, un palier à roulement à rouleaux incorporant la présente invention. Mis à part l'emploi de rouleaux 5' à la place des billes 5 et l'adaptation des bagues de roulement 3, 4 aux rouleaux 5', le rattrapage des faux-ronds se fait comme précédemment.

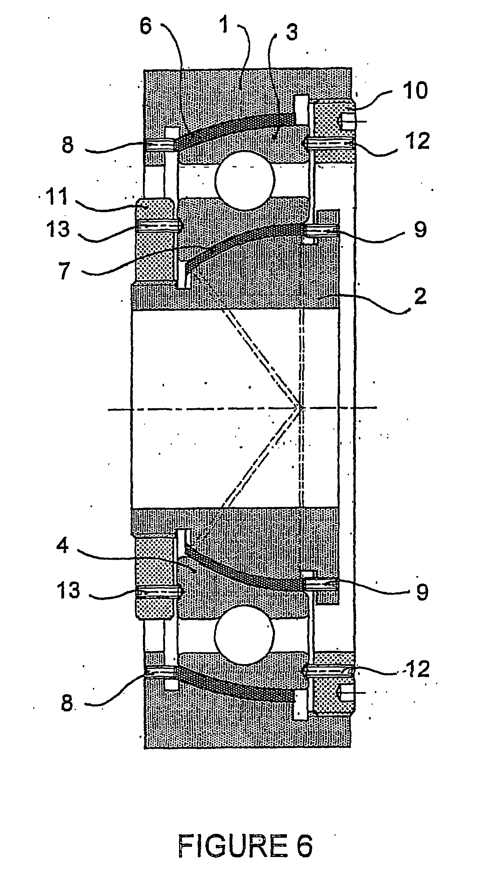

La Figure 6 représente un palier semblable à celui de la Figure 1, dans lequel on a incorporé une possibilité de réglage du voile. Pour ce qui est de ce voile, l'orientation des bagues de roulement est donné par la face des écrous 10 et 11. On prévoit des vis de pression 12, 13, par exemple trois vis de pression réparties à 120°, insérées respectivement dans chacun des écrous 10, et venant respectivement s'appuyer sur la périphérie de la bague extérieure de roulement 3 (vis 12) et la périphérie de la bague intérieure de roulement 4 (vis 13). On peut ainsi, par vissage des vis 12, 13 régler le voile finale des bagues de roulement, indépendamment des faux-ronds.

De préférence, on intercale des rondelles (non représentées) entre les vis et les bagues de roulement. De préférence, les rondelles sont des rondelles ayant une face plane et une face sphérique, la surface plane s'appuyant de préférence sur la bague de roulement.

## Revendications

1. Palier à roulement qui comprend, assemblés à jeu nul:
• une bague extérieure de roulement (3) ayant une surface extérieure (3b), et une surface intérieure de roulement (3a),
• une bague intérieure de roulement (4) ayant une surface extérieure (4b) et une surface intérieure de roulement (4a),
• des éléments de roulement (5, 5') disposés entre les surfaces intérieures de roulement (3a, 4a) des bagues de roulement, extérieure (3) et intérieure (4), respectivement,
• une couronne extérieure de support (1) ayant une surface intérieure (1a) et une couronne intérieure de support (2) ayant une surface intérieure (2a),
**caractérisé en ce que** :
• la surface extérieure (3b) de la bague extérieure de roulement (3) et la surface intérieure (1a) de la couronne extérieure de support (1) sont des surfaces sphériques dont les centres respectifs (C3b, C1a), situés sur un même axe de révolution, sont écartés l'un de l'autre, de sorte que les surfaces (3b, 1a) définissent entre elles un espace annulaire extérieur excentrique et sphérique,
• une bague extérieure excentrique (6), épousant la forme dudit espace annulaire extérieur et disposée dans ledit espace,
• la surface extérieure (4b) de la bague intérieure de roulement (4) et la surface intérieure (2a) de la couronne intérieure de support (2) sont des surfaces sphériques dont les centres (C4b, C2a), situés sur un même axe de révolution sont écartés l'un de l'autre, de sorte que les surfaces (4b, 2a) définissent entre elles un espace annulaire intérieur excentrique et sphérique,
• une bague intérieure excentrique (7) épousant la forme dudit espace annulaire intérieur et disposée dans ledit espace;
et **en ce que**
• des moyens (8, 9) sont prévus pour faire basculer par glissement les bagues excentriques extérieure (6) et intérieure (7) respectivement dans les espaces annulaires extérieur et intérieur,
grâce à quoi on peut rattraper les faux-ronds.

2. Palier à roulement selon la revendication 1, **caractérisé en ce que** les moyens (8, 9) de basculement sont constitués par plusieurs vis de réglages disposées sur une périphérie des bagues excentriques (6, 7).

3. Palier à roulement selon la revendication 2, **caractérisé en ce que** les vis de réglage sont au nombre de trois et sont disposées à 120° sur la périphérie des bagues excentriques (6, 7).

4. Palier à roulement selon la revendication 2, **caractérisé en ce que** les vis de réglage sont au nombre de 4 et sont disposées à 90° sur la périphérie des bagues excentriques (6, 7).

5. Palier à roulement selon l'une quelconque des revendications précédentes, **caractérisé en ce que** le palier à roulement est choisi parmi les paliers à roulement à billes, à rouleaux ou à aiguilles, de préférence les paliers à billes ou à rouleaux.

6. Palier à roulement selon l'une quelconque des revendications précédentes, **caractérisé en ce qu'**il comporte des moyens (12, 13) pour déplacer par glissement les bagues de roulement extérieure (3) et intérieure (4), grâce à quoi on peut régler le voile global indépendamment des faux-ronds.

7. Palier à roulement selon la revendication 6, **caractérisé en ce que** les moyens (12, 13) de déplacement par glissement sont trois vis de pression disposées à 120° sur une périphérie des bagues de roulement (3, 4).

8. Procédé pour rattraper les faux-ronds d'un palier à jeu nul comprenant:
• une bague extérieure de roulement (3) ayant une surface extérieure (3b), et une surface intérieure de roulement (3a),
• une bague intérieure de roulement (4) ayant une surface extérieure (4b) et une surface intérieure de roulement (4a),
• des éléments de roulement (5, 5') disposés entre les surfaces intérieures de roulement (3a, 4a) des bagues de roulement extérieure (3) et intérieure (4), respectivement,
• une couronne extérieure de support (1) ayant une surface intérieure (1a) et une couronne intérieure de support (2) ayant une surface intérieure (2a),
lesdites bagues de roulement (3, 4) étant maintenues entre les surfaces intérieures (1a, 2a) des couronnes de support extérieure (1) et intérieure (2),
**caractérisé en ce qu'**il consiste à disposer dans le palier à jeu nul:
• une bague extérieure excentrique (6) entre la surface extérieure (3b) de la bague extérieure de roulement (3) et la surface intérieure (1a) de la couronne extérieure de support (1), lesdites surfaces extérieure (3b) de la bague extérieure de roulement (3) et intérieure (1a) de la couronne extérieure de support (1) étant sphériques, ladite bague extérieure excentrique (6) pouvant être déplacée par glissement sur la surface extérieure sphérique (3b) de la bague extérieure de roulement (3) et sur la surface intérieure sphérique (1a) de la couronne extérieure de support (1), et
• une bague intérieure excentrique (7) entre la surface extérieure (4b) de la bague intérieure de roulement (4) et la surface intérieure (2a) de la couronne intérieure de support (2), lesdites surfaces extérieure (4b) de la bague intérieure de roulement (4) et intérieure (2a) de la couronne intérieure de support (2) étant sphériques, ladite bague intérieure excentrique (7) pouvant être déplacée par glissement sur la surface extérieure (4b) de la bague intérieure de roulement (4) et sur la surface intérieure (2a) de la couronne intérieure de support (2).

## Claims

1. A roller bearing which comprises, after assembly with zero clearance:
• an outer ball race (3) having an outer bearing surface (3b) and an inner bearing surface (3a),
• an inner ball race (4) having an outer bearing surface (4b) and an inner bearing surface (4a),
• bearing elements (5, 5') arranged between the inner bearing surfaces (3a, 4a) of the outer (3) and inner (4) ball races, respectively,
• an outer mantle ring (1) having an inner surface (1a) and an inner mantle ring (2) having an inner surface (2a),
**characterised in that** :
• the outer bearing surface (3b) of the outer bell race (3) and the inner surface (1 a) of the outer mantle ring(1) are spherical surfaces whereof the respective centres (C3b) and (C1a), situated on the same axis of revolution, are spaced from one another, so that the surfaces (3b) and (1a) delineate together an eccentric and spherical outer annular space,
• an eccentric outer ring (6), matching the shape of said outer annular space and arranged in said space,
• the outer bearing surface (4b) of the inner ball race (4) and the inner surface (2a) of the inner mantle ring (2) are spherical surfaces whereof the centres (C4b) and (C2a), situated on the same axis of revolution are spaced from one another, so that the surfaces (4b) and (2a) delineate together an eccentric and spherical inner annular space,
• an eccentric inner ring (7) matching the shape of said inner annular space and arranged in said space;
and **in that**
• means (8, 9) are provided to sliding swing the outer (6) and inner (7) eccentric rings, respectively, into the outer and inner annular spaces,
whereafter the radial run-outs can be corrected.

2. A roller bearing according to claim 1, **characterised in that** the swinging means (8, 9) are made of several adjustment screws arranged on a periphery of the eccentric rings (6, 7).

3. A roller bearing according to claim 2, **characterised in that** the adjustment screws are three in number and are arranged at 120° on the periphery of the eccentric rings (6, 7).

4. A roller bearing according to claim 2, **characterised in that** the adjustment screw are four in number and are arranged at 90° on the periphery of the eccentric rings (6, 7).

5. A roller bearing according to any one of the previous claims, **characterised in that** the roller bearing is selected among ball bearings, roller bearings or needle bearings, preferably ball bearings or roller bearings.

6. A roller bearing according to any one of the previous claims, **characterised in that** it comprises means (12, 13) to move the outer (3) and inner (4) ball races slidingly, whereafter the global warping can be corrected independently of radial run-outs.

7. A roller bearing according to claim 6, **characterised in that** the sliding motion means (12, 13) are three compression screws arranged at 120° on a periphery of the ball races (3, 4).

8. A method for correcting the radial run-outs of a zero clearance bearing comprising:
• an outer ball race (3) having an outer bearing surface (3b) and an inner bearing surface (3a),
• an inner ball race (4) having an outer bearing surface (4b) and an inner bearing surface (4a),
• bearing elements (5, 5') arranged between the inner bearing surfaces (3a, 4a) of the outer (3) and inner (4) ball races, respectively,
• an outer mantle ring (1) having an inner surface (1a) and an inner mantle ring (2) having an inner surface (2a),
said ball races (3, 4) being held between the inner surfaces (1a, 2a) of the outer (1) and inner (2) mantle rings,
**characterised in that** it consists in placing in the zero clearance bearing:
• an eccentric outer ring (6) between the outer bearing surface (3b) of the outer ball race (3) and the inner surface (1 a) of the outer mantle ring (1), said outer bearing surface (3b) of the outer ball race (3) and inner surface (1a) of the outer mantle ring (1) being spherical, said eccentric outer ring (6) being slideable on the outer spherical bearing surface (3b) of the outer ball race (3) and on the inner spherical surface (1 a) of the outer mantle ring(1), and
• an eccentric inner ring (7) between the outer bearing surface (4b) of the inner ball race (4) and the inner surface (2a) of the inner mantle ring (2), said outer bearing surface (4b) of the inner ball race (4) and inner surface (2a) of the inner mantle ring (2) being spherical, said eccentric inner ring (7) being slideable on the outer bearing surface (4b) of the inner ball race (4) and on the inner surface (2a) of the inner mantle ring (2).

## Patentansprüche

1. Wälzlager, das, ohne Spiel montiert, aufweist:
einen äußeren Wälzring (3) mit einer Außenfläche (3b) und einer inneren Wälzfläche (3a),
einen inneren Wälzring (4) mit einer Außenfläche (4b) und einer inneren Wälzfläche (4a),
Wälzelemente (5, 5'), die zwischen den inneren Wälzflächen (3a, 4a) des äußeren (3) bzw. des inneren Wälzrings (4) angeordnet sind,
einen äußeren Stützkranz (1) mit einer Innenfläche (1a) und einen inneren Stützkranz (2) mit einer Innenfläche (2a),
**dadurch gekennzeichnet, daß**
die Außenfläche (3b) des äußeren Wälzrings (3) und die Innenfläche (1a) des äußeren Stützkranzes (1) sphärische Flächen sind, deren jeweilige, auf der gleichen Drehachse befindlichen Mittelpunkte (C3b, C1a) derart voneinander beabstandet sind, daß die Flächen (3b, 1a) zwischen sich einen exzentrischen und sphärischen ringförmigen äußeren Raum bilden,
ein exzentrischer äußerer Ring (6) vorgesehen ist, welcher der Form des äußeren ringförmigen Raums folgt und in dem Raum angeordnet ist,
die Außenfläche (4b) des inneren Wälzrings (4) und die Innenfläche (2a) des inneren Stützkranzes (2) sphärische Flächen sind, deren auf der gleichen Drehachse befindlichen Mittelpunkte (C4b, C2a) derart voneinander beabstandet sind, daß die Flächen (4b, 2a) zwischen einander einen exzentrischen und sphärischenringförmigen inneren Raum bilden,
ein exzentrischer innerer Ring (7) vorgesehen ist, welcher der Form des ringförmigen inneren Raums folgt und in dem Raum angeordnet ist;
und daß
Einrichtungen (8, 9) vorgesehen sind, um den exzentrischen äußeren (6) und inneren Ring (7) jeweils in dem äußeren bzw. inneren ringförmigen Raum durch Gleiten zu verschwenken,
wodurch Rundlauffehler korrigiert werden können.

2. Wälzlager nach Anspruch 1, **dadurch gekennzeichnet, daß** die schwenkeinrichtungen (8, 9) aus mehreren Stellschrauben bestehen, die an einem Umfangsrand der exzentrischen Ringe (6, 7) angeordnet sind.

3. Wälzlager nach Anspruch 2, **dadurch gekennzeichnet, daß** die Zahl der Stellschrauben drei beträgt und diese um 120° beabstandet am Umfangsrand der exzentrischen Ringe (6, 7) angeordnet sind.

4. Wälzlager nach Anspruch 2, **dadurch gekennzeichnet, daß** die Zahl der Stellschrauben 4 beträgt und diese um 90° beabstandet am Umfangsrand der exzentrischen Ringe (6, 7) angeordnet sind.

5. Wälzlager nach einem der vorhergehenden Ansprüche, **dadurch gekennzeichnet, daß** das Wälzlager unter Wälzlagern mit Kugeln, Rollen oder Nadeln, vorzugsweise unter Kugel- oder Rollenlagern, gewählt ist.

6. Wälzlager nach einem der vorhergehenden Ansprüche, **dadurch gekennzeichnet, daß** es Einrichtungen (12, 13) zum gleitenden Verschieben des äußeren (3) und des inneren Wälzrings (4) aufweist, wodurch der gesamte Seitenschlag unabhängig von Rundlauffehlern eingestellt werden kann.

7. Wälzlager nach Anspruch 6, **dadurch gekennzeichnet, daß** die Einrichtungen (12, 13) zum gleitenden Verschieben aus drei Druckschrauben bestehen, die um 120° beabstandet am Umfangsrand der Wälzringe (3, 4) angeordnet sind.

8. Verfahren zum Korrigieren von Rundlauffehlern eines Lagers ohne Spiel, mit:
einem äußeren Wälzring (3) mit einer Außenfläche (3b) und einer inneren Wälzfläche (3a),
einem inneren Wälzring (4) mit einer Außenfläche (4b) und einer inneren Wälzfläche (4a),
Wälzelementen (5, 5'), die zwischen den inneren Wälzflächen (3a, 4a) des äußeren (3) bzw. des inneren Wälzrings (4) angeordnet sind,
einem äußeren Stützkranz (1) mit einer Innenfläche (1a) und einem inneren Stützkranz (2) mit einer Innenfläche (2a),
wobei die Wälzringe (3, 4) zwischen den Innenflächen (1a, 2a) des äußeren (1) und des inneren Stützkranzes (2) gehalten sind,
**dadurch gekennzeichnet, daß** es darin besteht, in dem spielfreien Lager anzuordnen:
einen exzentrischen äußeren Ring (6) zwischen der Außenfläche (3b) des äußeren Wälzrings (3) und der Innenfläche (1a) des äußeren Stützkranzes (1), wobei die Außenfläche (3b) des äußeren Wälzrings (5) und die Innenfläche (1a) des äußeren Stützkranzes (1) sphärisch sind,
wobei der exzentrische äußere Ring (6) gleitend auf der sphärischen Außenfläche (3b) des äußeren Wälzrings (3) und auf der sphärischen Innenfläche (1a) des äußeren Stützkranzes (1) verschiebbar ist, und
einen exzentrischen inneren Ring (7) zwischen der Außenfläche (4b) des inneren Wälzrings (4) und der Innenfläche (2a) des inneren Stützkranzes (2), wobei die Außenfläche (4b) des inneren Wälzrings (4) und die Innenfläche (2a) des inneren Stützkranzes (2) sphärisch sind,
wobei der exzentrische innere Ring (7) gleitend auf der Außenfläche (4b) des inneren Wälzrings (4) und auf der Innenfläche (2a) des inneren Stützkranzes (2) verschiebbar ist.
